# EUROPEAN PATENT SPECIFICATION

(11) **EP 3 185 141 B1**
(45) Date of publication and mention of the grant of the patent: **30.12.2020**
(21) Application number: 16002506.0
(22) Date of filing: 24.11.2016
(51) Int. Cl.: G06F 16/904, G06F 16/9035

(54) **DISPLAY OF RELEVANT INFORMATION FROM MULTIPLE DATA SOURCES**
ANZEIGE VON RELEVANTEN INFORMATIONEN AUS MEHREREN DATENQUELLEN
AFFICHAGE D'INFORMATIONS PERTINENTES À PARTIR DE MULTIPLES SOURCES DE DONNÉES

(30) Priority: 21.12.2015 US 201514976628
(43) Date of publication of application: 28.06.2017
(73) Proprietor: SAP SE, 69190 Walldorf (DE)
(72) Inventor: Watters, Dan, 69190 Walldorf (DE)
(74) Representative: Müller-Boré & Partner Patentanwälte PartG mbB

(56) References cited:
- WO-A1-2005/050476
- US-A1- 2014 282 261
- US-A1- 2015 286 342

## Description

### BACKGROUND

In today's business environment, there is an ever-increasing amount of data generated as businesses track and store more and more information. Unfortunately, the data may be spread across multiple sources or applications, making it difficult for users of business software to draw the relevant connections and conclusions needed to succeed in a competitive marketplace.

Further, although different users of business software may place different importance on different portions of the available data based on their needs, existing services fail to meet the unique needs of each user.

What is needed is an easy, efficient way to present the most relevant information to a user according their needs.

WO 2005/050476 A1 relates to systems and methods that are provided for searching and displaying reports to a user. A user selects an item from a displayed list of reporting objects. Based on the user's selection, a list of report topics available for the selected item are determined and presented to the user. In response, the user selects a report topic and, thereafter, the appropriate available report is directly presented or displayed to the user without any further user interaction. Further, an appropriate updated report is generated in response to the user's selections.

US 2014/282261 A1 relates to technologies for providing an interactive user interface for enabling users to interact with reports and other documents associated with an entity on various client devices and to manage business activities from their client device. The business application user interface enables a user to access work documents on a client device over a network, and to interact with the documents on the client device. The user interface displays reduced thumbnail versions of available reports, selects and views them based on one or more roles. The user interface adapts how a report is displayed in a full size based on the type of device on which the user views the report.

US 2015/0286342 A1 relates to a computing device that associates each of multiple applications with a corresponding tile object. Each of the multiple applications are executed to generate application data, which is displayed in the corresponding tile object.

### BRIEF DESCRIPTION OF THE DRAWINGS

FIG. 1 shows a simplified user home page in a multi-application environment according to an example embodiment
FIG. 2 shows a simplified Overview Page 200 according to an example embodiment.
FIG. 3A-C shows simplified Variable Content Packets 300 according to an example embodiment.
FIG. 4 shows an exemplary architecture of systems according to an example embodiment.

### DETAILED DESCRIPTION

Reference will now be made in detail to embodiments, examples of which are illustrated in the accompanying drawings. In the following detailed description, numerous specific details are set forth in order to provide a thorough understanding of the present disclosure. However, it will be apparent to one of ordinary skill in the art that the present disclosure may be practiced without these specific details. In other instances, well-known methods, procedures, components, and circuits have not been described in detail so as not to unnecessarily obscure aspects of the embodiments. Wherever possible, like reference numbers will be used for like elements.

Example embodiments of the present disclosure provide for a method, device, system, and computer program product for displaying relevant information compiled from multiple sources and related to user roles in multiple application environments.

In some embodiments, users may work with a collection of pre-defined, focused applications that are displayed on a multi-app home page based on a selected domain and/or role. In other embodiments, the collection of applications made visible to the user is configurable. In some embodiments, the collection of applications is configurable by the user's choice of available domains and/or roles. In another embodiment, the available domains and/or roles to a user are limited to specific domains and/or roles that are relevant to the user's duties, which may be identified, controlled, etc. by among other things access credentials, operational rules/rights/etc. (through for example an Access Control List (ACL)), etc.

In some embodiments, the applications are presented as tiles on the multi-app home page. In some embodiments, the application tiles display an application title and relevant information, data, or insights tailored to the user's selection of a domain and/or role/roles. In some embodiments, a particular application that may be displayed for multiple different domains and/or roles may display different information, data, or insights depending on the particular domain and/or role selected by the user.

In some embodiments, the collection of displayed applications on the multi-app home page may include an Overview Page application. The Overview Page is an application featuring a layout of multiple Variable Content Packets. In some embodiments, a Variable Content Packet is a container which displays a view of application data. In other embodiments, a Variable Content Packet is an expanded view of the application information, data, or insights displayed on the application tile as shown on the multi-app home page. That is, whereas the application information, data, or insight displayed on the application tile displayed on the multi-app home page may provide a high-level view of the relevant information, data, or insight, the Variable Content Packet can display more focused and detailed content. In some embodiments, the Variable Content Packet can display data, information, and/or content drawn from one or more data sources. In other embodiments, the Variable Content Packet can display data, information, and/or content drawn from one or more of the applications in the collection of applications configured on the multi-app home page based on the user's settings of domains and/or roles.

In some embodiments, the Overview Page may allow the user to select from a further subset of available roles based on the domains and/or roles configured at the multi-app home page level. In some embodiments, the selection/deselection/change of one or more roles may trigger a refresh of the Overview Page to display the appropriate Variable Content Packets with relevant content according to the newly selected/deselected/changed role or roles. In another embodiment, this selection/deselection/change of one or more roles and refresh of the Overview Page may cause a new Variable Content Packet to be generated, a previously displayed Variable Content Packet to be removed, and/or the relevant information, data, or content displayed in a particular Variable Content Packet to be changed.

In some embodiments, the content of the Variable Content Packets displayed on the Overview Page may be configurable by the user according to their needs. For example, the content may be filtered according to time and/or geography, or any other relevant characteristic. In other embodiments, these user-configured variant views of Variable Content Packets displayed on the Overview Page may be saved by the user to be recalled in the future as needed.

In some embodiments, the Variable Content Packets are a changeable size based on the intended amount of relevant information to display. Based on a user's domains and/or roles, Variable Content Packets may be system-generated for an Overview Page at a default size based on the system knowledge of the role and/or Variable Content Packet. In other embodiments, the default size of a Variable Content Packet to display may be configured by the user. In some embodiments, a Variable Content Packet may be manually expanded or collapsed to show more or less relevant content. In other embodiments, a Variable Content Packet may have actions associated with it. An action associated with a Variable Content Packet may have associated sub-actions. In some embodiments, a user may take action on Variable Content Packet content on an individual and/or a group basis. In other embodiments, the content of a Variable Content Packet may be actionable and launch the application from which the actionable content of the Variable Content Packet is derived.

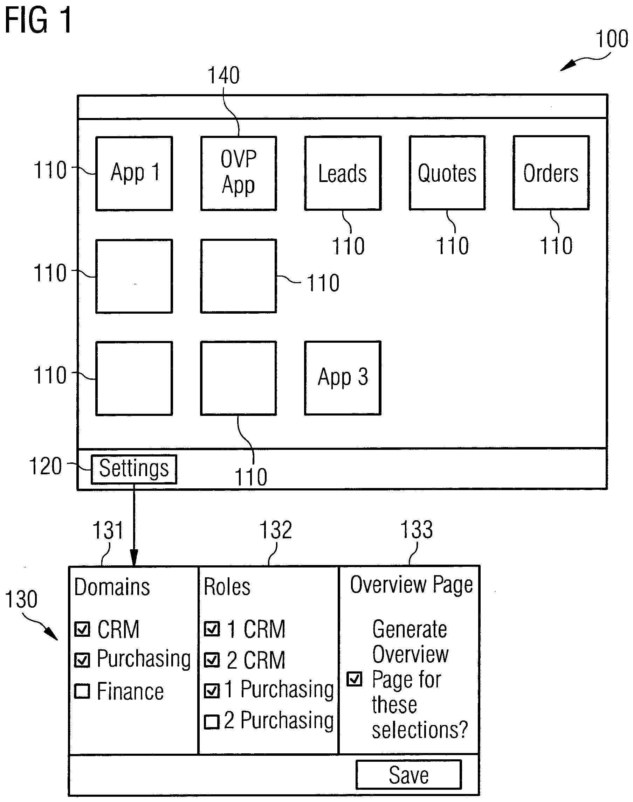

FIG. 1 shows a simplified user home page 100 in a multi-application environment according to an example embodiment. In some embodiments, the multi-app user home page comprises a series of application tiles 110 that are available to the user based on the selected domains and/or roles. For example, as shown in FIG. 1, the user is presented with applications related to Leads, Quotes, and Orders. The application tiles 110 may display information, data, requests, deadlines, and other business information associated with the respective application. The application tiles 110 may be selectable by the user, and selection by the user may launch the respective application. Application tiles 110 may include the title of the application, and a relevant piece of data, insight, or other information about the relevant application content.

In some embodiments, the multi-app home page may comprise a selectable settings button 120. Selectable settings button 120 provides access to the settings area 130. In some embodiments, the available domains and/or roles to a user are limited to specific domains and/or roles that are relevant to the user's duties, which may be identified, controlled, etc. by among other things access credentials, operational rules/rights/etc. (through for example an Access Control List (ACL)), etc. The available domains may be displayed in domain area 131. Domains are to be understood as a broad categorization of a user's position, such as a department. For example, the user in FIG. 1 has the domains of "CRM," "Purchasing," and "Finance" available, although as discussed above, any domain relevant to the user's duties may be available. In some embodiments, the available domains may be selectable. For example, the user in FIG 1. has selected the domains of "CRM" and "Purchasing." The available roles may be displayed in role area 132. Roles are a narrower categorization of a user's position than a domain, for example a group within a department. For example, the user in FIG. 1 has the roles of "1 CRM," "2 CRM," "1 Purchasing," and "2 Purchasing" available, although any role relevant to the user's duties may be available. In some embodiments, the available roles may be selectable. For example, the user in FIG. 1 has selected the roles of "1 CRM," "2 CRM," and "1 Purchasing."

In some embodiments, the selected domains and/or roles may configure the available applications on the multi-app home page. In some embodiments, the multi-app home page may refresh in real-time as available domains and/or roles are selected or unselected. In other embodiments, the multi-app home page may refresh when the user saves the selected settings. In some embodiments, application tiles 110 may be added, deleted, or moved around the multi-app home page layout when the multi-app home page is refreshed as a result of the selected domains and/or roles. In other embodiments, an application tile may be available for a number of different domains and/or roles, but the displayed insight may update when the multi-app home page is refreshed.

The settings area 130 may further comprise Overview Page area 133, wherein the user may select whether an Overview Page will be generated for the selected domains and/or roles. In some embodiments, the Overview Page is generated in real-time upon selection of the option to generate an Overview Page. In other embodiments, the Overview Page is generated when the user saves the selected settings. When the Overview Page is selected, an Overview Page application tile 140 will be shown on multi-app home page 100. Overview Page application tile 140 functions like any other application tile 1 10, and the user may launch the generated Overview Page application by selecting application tile 140.

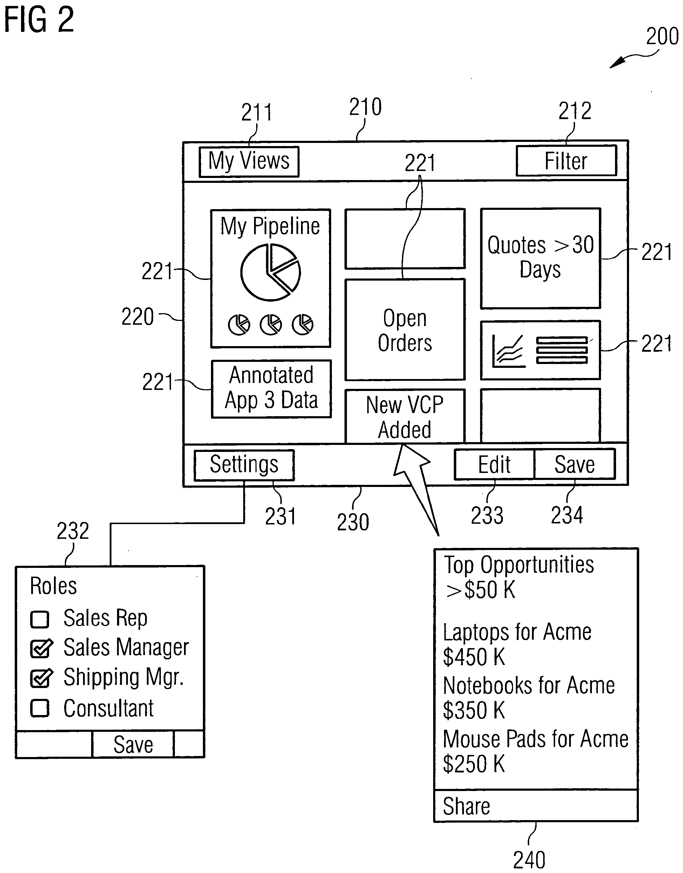

FIG. 2 shows a simplified Overview Page 200 according to an example embodiment. The Overview Page 200 may include among other things a menu bar 210, a Variable Content Packet area 220, and a settings bar 230. Variable Content Packet area 220 may comprise a collection of Variable Content Packets 221. Variable Content Packets 221 collect and compile data from one or more sources that are relevant to the user according to the selected domains and/or roles. In some embodiments, the Variable Content Packets 221 may collect and compile application data from one or more applications that are relevant to the user according to the selected domains and/or roles. In other embodiments, the one or more data sources may include, for example, key performance indicator data from customer relationship manager software, business data from enterprise resource planning software, schedule data from calendar software, external data from a sensor or set of sensors, and/or remote data from one or more remote data sources, e.g., from the internet. Content from one or more of these data sources may be presented in a Variable Content Packet as filtered by the selected domains and/or roles.

For example, the Overview Page in FIG. 2 contains Variable Content Packets for the presentation of content related to "My Pipeline," "Open Orders," and "Quotes > 30 Days," although Variable Content Packets may be generated and displayed containing any content relevant to the user according to the selected domains and/or roles. In some embodiments, application data displayed in a Variable Content Packet is drawn obtained from the respective application at the time the Overview Page is opened. In other embodiments, application data displayed in a Variable Content Packet is updated in real-time. In some embodiments, the user may save a particular VCP as a tile to be displayed on the multi-app home page 100.

In some embodiments, settings bar 230 may comprise a selectable "Settings" button 231 to provide access to the settings area 232. In some embodiments, settings area 232 provides a further subset of roles relevant to a user according to the domains and/or roles selected at the multi-app home page. The available sub-roles to a user may be identified, controlled, etc. by among other things access credentials, operational rules/rights/etc. (through for example an Access Control List (ACL)), etc. For example, the user in FIG. 2 has the roles of "Sales Rep," "Sales Manager," "Shipping Mgr.," and "Consultant" available, although any role relevant to the user's duties may be available. In some embodiments, the available roles may be selectable. For example, the user in FIG. 2 has selected the roles of "Sales Manager," "Shipping Mgr."

In some embodiments, the selected roles may configure the Variable Content Packets to be displayed on the Overview Page. In some embodiments, the multi-app home page may refresh in real-time as available roles are selected or unselected. In other embodiments, the Overview Page may refresh when the user saves the selected settings. In some embodiments, Variable Content Packets may be added, deleted, or moved around the Overview Page layout when the Overview Page is refreshed as a result of the selected roles. In other embodiments, a Variable Content Packet may be available for a number of different roles, but the displayed content may update when the multi-app home page is refreshed. For example, new Variable Content Packet 240 may be generated upon the selection of the "Sales Manager" role and displayed in the Variable Content Packet area 220.

Settings bar 230 may further comprise a selectable "Edit" button 233 to allow for configuration of the user's Overview Page. In some embodiments, the user may delete specific Variable Content Packets from the Overview Page area 220. In some embodiments, the user may be presented with Variable Content Packets that have previously been deleted, but would otherwise be available according to the selected domains and/or roles. The user may add specific Variable Content Packets to Overview Page area 220. In other embodiments, the user may alter the layout of Variable Content Packets 221 in the Overview Page area 220. In some embodiments, the user may resize Variable Content Packets.

In some embodiments, the user may further configure the Overview Page through filtering. Menu bar 210 contains a selectable "Filter" button 212 by which the user may filer the data and/or content of the displayed Variable Content Packets. Filtering may be done based on any relevant criteria, including, time or geography. For example, a user may wish to view only the sales from North America, or all global sales. A user may further wish to view only the sales from a particular quarter, or between specific dates. In some embodiments, the user may filter the Variable Content Packet data and/or content according to one or more criteria.

In some embodiments, the user may save the configured Overview Page for storage and later recall by selecting "Save" button 234 in settings bar 220. In some embodiments, the user may name a variant Overview Page during the saving process. In some embodiments, menu bar 210 may comprise a selectable "My Views" button 211 by which the user may recall their saved variant Overview Pages.

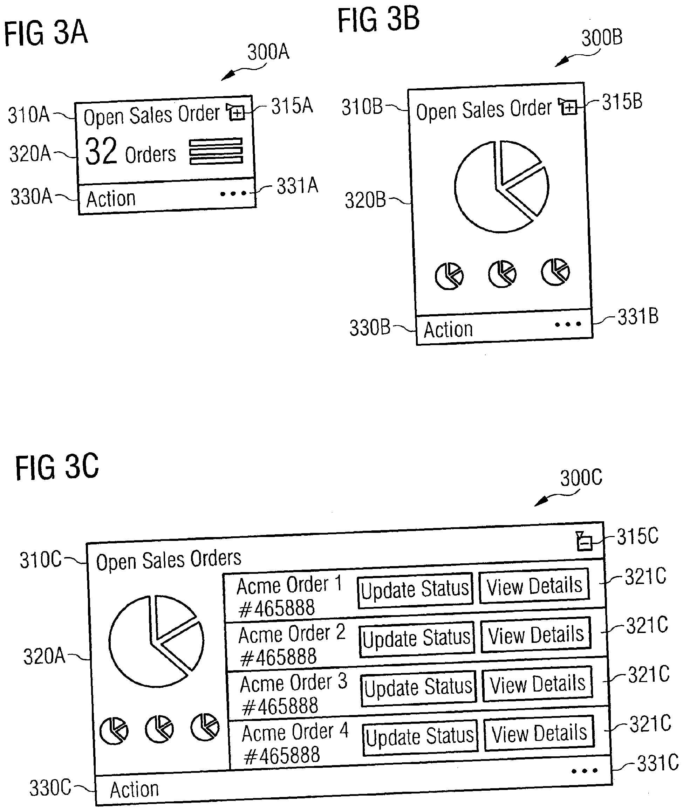

FIG. 3A-C shows simplified Variable Content Packets 300 according to an example embodiment. Variable Content Packet 300 may comprise a title 310, sizing toggle 315, content area 320, and action area 330. In some embodiments, Variable Content Packets 300 are changeable in size based on the intended amount of relevant data and/or content to display. FIG. 3A shows a simplified Variable Content Packet 300A at a small size. Corresponding content area 320A is small, and the amount of data and/or content is limited. For example, the only data and/or content displayed in content area 320A is the number of open sales orders, 32. In some embodiments, the user may configure the size of a Variable Content Packet by selecting toggle 315A. For example, the user may toggle the size of Variable Content Packet 300A from the small size shown in FIG. 3A to the medium size shown in FIG. 3B. The amount of data and/or content that may be shown in content area 320B of Variable Content Packet 300B is increased. For example, content area 320B may display further information about the open sales orders, such as visualizations of the open sales orders broken down by region, amount, or some other criteria.

In some embodiments, the user may select toggle 315B to decrease the size of Variable Content Packet to the small size shown in FIG. 3A, or to further increase the size of the Variable Content Packet to the large size shown in FIG. 3C. Content area 320C may now display even more relevant data. For example, content area 320C now displays individual open sales orders 321C. In some embodiments, the user may select toggle 315C to decrease the size of Variable Content Packet to the medium size shown in FIG. 3B, or the small size shown in FIG. 3A. In other embodiments, the Variable Content Packet may be resizeable with more granularity than the three sizes exemplified here.

In some embodiments, a re-sized Variable Content Packet may collect and compile data from the same, different, additional, or fewer data sources than when displayed at a different size. One of ordinary skill in the art will appreciate that the layout of relevant data as shown in the Variable Content Packets of FIG. 3 is exemplary only, and that additional layouts of, *e.g.,* the title 310, sizing toggle 315, content area 320, and action area 330 may be contemplated within the context of the present disclosure. Variable Content Packets may also further comprise additional layout areas not specifically contemplated herein. In some embodiments, the layout of the Variable Content Packet may be determined based on the user's selected domains and/or roles. In other embodiments, the layout of a re-sized Variable Content Packet may be different from the layout of the Variable Content Packet when displayed at a different size.

In some embodiments, the default size of a Variable Content Packet may be determined based on the user's selected domains and/or roles. In other embodiments, the different Variable Content Packets to be displayed on a user's Overview Page may have different default sizes. In other embodiments, the user may adjust a default Variable Content Packet size to their preference.

In some embodiments, the content and/or data of Variable Content Packets 300 are actionable. That is, the user may select the data and/or content to launch the application from which the data and/or content was drawn. In other embodiments, the data and/or content may present specific user actions related to the displayed data and/or content. For example, open orders 321C provide user actions "Update Status" and "View Details." In some embodiments, the manipulation of data and/or content in a Variable Content Packet will exchange data with the application from which the data and/or content was drawn.

In some embodiments, Variable Content Packets may further comprise an action area 330 that presents an action for the user to take on the Variable Content Packet. Actions may include, but are not limited to, things such as sharing, refreshing, marking as completed, dismissing, saving to the multi-app home page, etc. In some embodiments, action area 330 is selectable and may trigger a primary action upon user selection. In other embodiments, action area 330 may comprise selectable action toggle 331, whereby secondary actions are displayed to the user upon triggering action toggle 331.

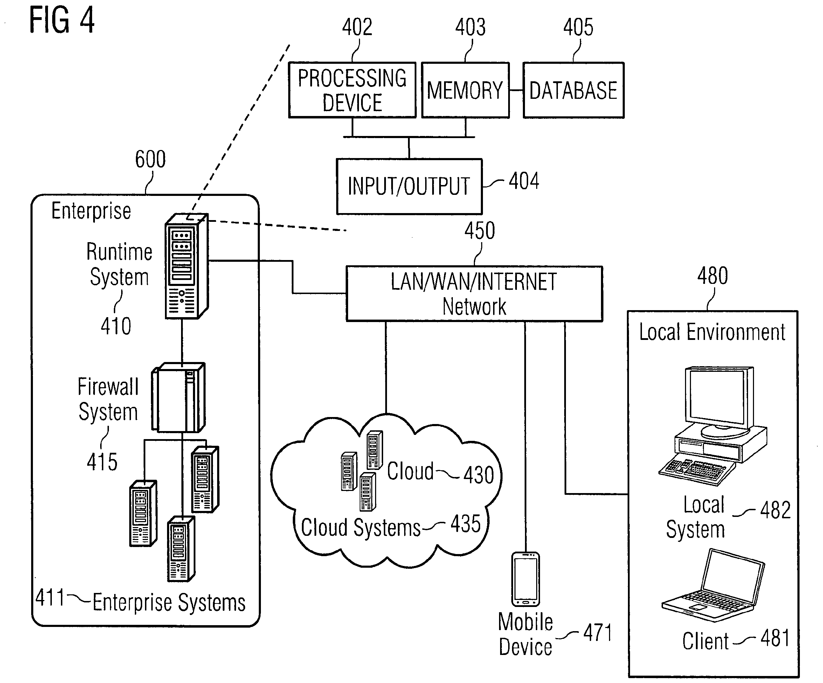

FIG. 4 shows an exemplary architecture of systems according to an example embodiment. Runtime system 410, may be connected to firewall system 415 and network 450. Network 450 may include a LAN, WAN, VPN, or the Internet. Mobile device 471, the local systems 482 and clients 481 in local environment 480, and the cloud systems 435 in the cloud environment 430 may also be connected to the network 450. The firewall system 415 may also be connected to the enterprise systems 411 and may provide an additional layer of security for enterprise systems 411 by preventing unauthorized access to these systems 411.

Each of the systems, clients, and devices in FIG. 4 may comprise any combination of one or more of *inter alia* a desktop computer, a notebook computer, a laptop computer, a tablet, a smartphone, a smartwatch, etc.

Each of the systems, clients, and devices in FIG. 4 may contain a processing device 402, memory 403 containing a database 405, and an input/output interface 404, all of which may be interconnected via a system bus. In various embodiments, each of the systems 411, 471, 410, 415, 430, 481, and 482 may have an architecture with modular hardware and/or software systems that include additional and/or different systems communicating through one or more networks. The modular design may enable a business to add, exchange, and upgrade systems, including using systems from different vendors in some embodiments. Because of the highly customized nature of these systems, different embodiments may have different types, quantities, and configurations of systems depending on the environment and organizational demands.

In an embodiment, memory 403 may contain different components for retrieving, presenting, changing, and saving data. Memory 403 may include a variety of memory devices, for example, Dynamic Random Access Memory (DRAM), Static RAM (SRAM), flash memory, cache memory, and other memory devices. Additionally, for example, memory 403 and processing device(s) 402 may be distributed across several different computers that collectively comprise a system.

Processing device 402 may perform computation and control functions of a system and comprises a suitable central processing unit (CPU). Processing device 402 may comprise a single integrated circuit, such as a microprocessing device, or may comprise any suitable number of integrated circuit devices and/or circuit boards working in cooperation to accomplish the functions of a processing device. Processing device 402 may execute computer programs, such as object-oriented computer programs, within memory 403.

Further, operation of the disclosed embodiments has been described in the context of servers and terminals that implement storage apparatus such as databases. These systems can be embodied in electronic devices or integrated circuits, such as application specific integrated circuits, field programmable gate arrays and/or digital signal processors. Alternatively, they can be embodied in computer programs that execute on personal computers, notebook computers, tablets, smartphones or computer servers. Such computer programs typically are stored in physical storage media such as electronic-, magnetic- and/or optically-based storage devices, where they may be read to a processor, under control of an operating system and executed. And, of course, these components may be provided as hybrid systems that distribute functionality across dedicated hardware components and programmed general-purpose processors, as desired.

The foregoing description has been presented for purposes of illustration and description. It is not exhaustive and does not limit embodiments of the disclosure to the precise forms disclosed. Modifications and variations are possible in light of the above teachings or may be acquired from the practicing embodiments consistent with the disclosure. For example, some of the described embodiments may include software and hardware, but some systems and methods consistent with the present disclosure may be implemented in software or hardware alone. Additionally, although aspects of the present disclosure are described as being stored in memory, this may include other computer readable media, such as secondary storage devices, for example, hard disks, floppy disks, or CD ROM; the Internet or other propagation medium; or other forms of RAM or ROM.

The disclosure is also directed to computer program products comprising software stored on any computer useable medium. Such software, when executed in one or more data processing devices, causes data processing device(s) to operate as described herein. Embodiments of the disclosure employ any computer useable or readable medium, known now or in the future. Examples of computer useable mediums include, but are not limited to, primary storage devices (e.g., any type of random access memory), secondary storage devices (e.g., hard drives, floppy disks, Compact Disc Read-Only Memory (CD-ROM) disks, Zip disks, tapes, magnetic storage devices, optical storage devices, Microelectromechanical Systems (MEMS), nanotechnological storage device, etc.), and communication mediums (e.g., wired and wireless communications networks, local area networks, wide area networks. intranets. etc.).

Based on the teachings contained in this disclosure, it will be apparent to persons skilled in the relevant art(s) how to make and use the disclosure using data processing devices, computer systems, and/or computer architectures other than that shown in FIG. 4. In particular, embodiments may operate with software, hardware, and/or operating system implementations other than those described herein.

In addition, in the foregoing Detailed Description, various features may be grouped or described together for the purpose of streamlining the disclosure. This disclosure is not to be interpreted as reflecting an intention that all such features are required to provide an operable embodiment. The scope of the invention is, therefore, indicated by the appended claims rather than by the foregoing description.

## Claims

1. A method of presenting relevant data compiled from multiple sources and related to user roles in multiple application environments, the method comprising:
presenting applications as tiles on a multi-app home page (100);
displaying, at least one domain (131) in a domain area, wherein the at least one domain (131) and the domain area are part of a settings area (130) and the settings area (130) is accessible from the multi-app home page (100);
selecting, by a user, at least one of the displayed domains (131);
displaying at least one role (132);
selecting, by the user, at least one of the displayed roles (132);
selecting, by the user, an option to generate an Overview Page for the selected domains and/or roles, wherein the Overview Page is generated in real-time upon selection of the option, the multi-app home page (100) comprising a series of application tiles that are available to be selected by the user for launching the corresponding application based on the selected domains and/or roles, and an Overview Page application tile (140) for launching the generated Overview Page, wherein the generated Overview Page includes a collection of Variable Content Packets (221; 300);
compiling data from one or more of the multiple data sources according to the selected at least one domain (131) and at least one role (132), wherein the one or more data sources include remote data from one or more remote data sources from the Internet; and
displaying the compiled data (220), wherein the compiled data is displayed in at least one Variable Content Packet in the collection of Variable Content Packets (221; 300), the Variable Content Packet being an expanded view of application data displayed on an application tile;
wherein the Variable Content Packets (221) collect and compile application data from the one or more applications according to the selected domains (131) and/or roles (132);
wherein the Overview Page (200) includes a settings bar (230) including a selectable settings button to provide access to a second settings area (23) for providing a further subset of roles relevant to a user according to the domains and/or roles selected at the multi-app home page;
wherein the Overview Page allows the user to select from the further subset of available roles based on the domains and/or roles selected at the multi-app home page level, wherein a selection/deselection/change of one or more roles triggers a refresh of the Overview Page to display appropriate Variable Content Packets with content according to the newly selected/deselected/changed one or more roles,
wherein the Variable Content Packets are system-generated for the Overview Page at a default size and are resizeable, wherein a re-sized Variable Content Packet collects and compiles data from the same data source when displayed at a different size.

2. The method of claim 1, wherein the displayed at least one role (132) is determined according to the selected at least one domain (131).

3. The method of claim 1, wherein the at least one Variable Content Packet (221; 300) is displayed on the Overview Page (200).

4. The method of any one of claims 1 to 3, further comprising:
displaying at least one sub-role (232);
selecting at least one of the displayed sub-roles (232);
compiling data from one or more data sources according to the selected at least one sub-role (232); and
displaying the compiled data.

5. The method of claim 4, wherein the displayed sub-role is determined according to at least one of the selected at least one domain (131) and the selected at least one role (131).

6. The method of any one of claims 1 to 5, further comprising:
filtering the compiled data according to at least one criteria.

7. A system to display relevant data compiled from multiple sources and related to user roles in multiple application environments, the system comprising:
a display; and
a processor configured to perform operations according to the method of claim 1.

8. The system of claim 7, wherein the displayed at least one role (132) is determined according to the selected at least one domain (131).

9. The system of claim 8, wherein the at least one Variable Content Packet (221; 300) is displayed on the Overview Page (200).

10. The system of any one of claims 7 to 9, wherein the processor is further configured to:
display at least one sub-role (232);
receive a selection of at least one of the displayed sub-roles (232);
compile data from one or more data sources according to the selected at least one sub-role (232); and
display the compiled data.

11. The system of claim 10, wherein the displayed sub-role (232) is determined according to at least one of the selected at least one domain (131) and the selected at least one role (132).

12. The system of any one of claims 7 to 11, wherein the processor is further configured to:
filter the compiled data according to at least one criteria.

13. A non-transitory computer-readable medium storing program instructions that, when executed, cause a processor to automatically perform an action corresponding to the method of any one of claims 1 to 6.

## Patentansprüche

1. Verfahren zum Präsentieren relevanter Daten, die aus mehreren Quellen zusammengestellt wurden und sich auf Benutzerrollen in mehreren Anwendungsumgebungen beziehen, wobei das Verfahren umfasst:
Präsentieren von Anwendungen als Kacheln auf einer Multi-App-Homepage (100);
Anzeigen von zumindest einer Domain (131) in einem Domainbereich, wobei die zumindest eine Domain (131) und der Domainbereich Teil eines Einstellungsbereichs (130) sind und der Einstellungsbereich (130) von der Multi-App-Homepage (100) aus zugänglich ist;
Auswählen, durch einen Benutzer, von zumindest einer der angezeigten Domains (131);
Anzeigen zumindest einer Rolle (132);
Auswählen, durch den Benutzer, von zumindest einer der angezeigten Rollen (132);
Auswählen, durch den Benutzer, einer Option zum Generieren einer Übersichtsseite für die ausgewählten Domains und/oder Rollen, wobei die Übersichtsseite bei Auswahl der Option in Echtzeit generiert wird, wobei die Multi-App-Homepage (100) eine Reihe von Anwendungskacheln, die dahingehend verfügbar sind, von dem Benutzer ausgewählt zu werden, um die entsprechende Anwendung zu starten, und zwar basierend auf den ausgewählten Domains und/oder Rollen, und eine Übersichtsseite-Anwendungskachel (140) zum Starten der generierten Übersichtsseite umfasst, wobei die generierte Übersichtsseite eine Sammlung von Paketen mit variablem Inhalt (221, 300) enthält;
Zusammenstellen von Daten aus einer oder mehreren der mehreren Datenquellen gemäß der ausgewählten zumindest eine Domain (131) und zumindest einer Rolle (132), wobei die eine oder mehreren Datenquellen Remote-Daten von einer oder mehreren Remote-Datenquellen aus dem Internet enthalten; und
Anzeigen der kompilierten Daten (220), wobei die kompilierten Daten in zumindest einem Paket mit variablem Inhalt in der Sammlung von Paketen mit variablem Inhalt (221; 300) angezeigt werden, wobei das Paket mit variablem Inhalt eine erweiterte Ansicht von Anwendungsdaten ist, die auf einer Anwendungskachel angezeigt werden;
wobei die Pakte mit variablem Inhalt (221) Anwendungsdaten von der einen oder den mehreren Anwendungen gemäß den ausgewählten Domains (131) und/oder Rollen (132) sammeln und zusammenstellen;
wobei die Übersichtsseite (200) eine Einstellungsleiste (230) enthält, die eine auswählbare Einstellungsschaltfläche enthält, um einen Zugriff auf einen zweiten Einstellungsbereich (23) zum Bereitstellen einer weiteren Teilmenge von Rollen bereitzustellen, die für einen Benutzer relevant sind, und zwar gemäß den ausgewählten Domains und/oder Rollen auf der Multi-App-Homepage;
wobei die Übersichtsseite dem Benutzer erlaubt, aus der weiteren Teilmenge verfügbarer Rollen basierend auf den Domains und/oder Rollen auszuwählen, die auf der Ebene der Multi-App-Homepage ausgewählt werden, wobei eine Auswahl/Abwahl/Änderung einer oder mehrerer Rollen eine Aktualisierung der Übersichtsseite auslöst, um geeignete Pakte mit variablem Inhalt entsprechend der neu ausgewählten/abgewählten/geänderten einen oder mehreren Rollen anzuzeigen;
wobei die Pakete mit variablem Inhalt für die Übersichtsseite in einer Standardgröße vom System generiert werden und in der Größe verändert werden können, wobei ein größenverändertes Paket mit variablem Inhalt Daten aus derselben Datenquelle sammelt und zusammenstellt, wenn sie in einer anderen Größe angezeigt werden.

2. Verfahren nach Anspruch 1, wobei die angezeigte zumindest eine Rolle (132) gemäß der ausgewählten zumindest eine Domain (131) bestimmt wird.

3. Verfahren nach Anspruch 1, wobei das zumindest eine Paket mit variablem Inhalt (221; 300) auf einer Übersichtsseite (200) angezeigt wird.

4. Verfahren nach einem der Ansprüche 1 bis 3, ferner umfassend:
Anzeigen zumindest einer Unterrolle (232);
Auswählen zumindest einer der angezeigten Unterrollen (232);
Zusammenstellen von Daten aus einer oder mehreren Datenquellen gemäß der ausgewählten zumindest einen Unterrolle (232); und
Anzeigen der zusammengestellten Daten.

5. Verfahren nach Anspruch 4, wobei die angezeigte Unterrolle gemäß zumindest einer der ausgewählten zumindest einen Domain (131) und der ausgewählten zumindest einen Rolle (131) bestimmt wird.

6. Verfahren nach einem der Ansprüche 1 bis 5, ferner umfassend:
Filtern der zusammengestellten Daten gemäß zumindest einem Kriterium.

7. System zum Anzeigen relevanter Daten, die aus mehreren Quellen zusammengestellt werden und sich auf Benutzerrollen in mehreren Anwendungsumgebungen beziehen, wobei das System umfasst:
eine Anzeige; und
einen Prozessor, der konfiguriert ist, Operationen gemäß dem Verfahren nach Anspruch 1 durchzuführen.

8. System nach Anspruch 7, wobei die angezeigte zumindest eine Rolle (132) gemäß der ausgewählten zumindest eine Domain (131) bestimmt wird.

9. System nach Anspruch 8, wobei das zumindest eine Paket mit variablem Inhalt (221; 300) auf einer Übersichtsseite (200) angezeigt wird.

10. System nach einem der Ansprüche 7 bis 9, wobei der Prozessor ferner konfiguriert ist zum:
Anzeigen zumindest einer Unterrolle (232);
Empfangen einer Auswahl von zumindest einer der angezeigten Unterrollen (232);
Zusammenstellen von Daten aus einer oder mehreren Datenquellen gemäß der ausgewählten zumindest einen Unterrolle (232); und
Anzeigen der zusammengestellten Daten.

11. System nach Anspruch 10, wobei die angezeigte Unterrolle (232) gemäß zumindest einer der ausgewählten zumindest einen Domain (131) und der ausgewählten zumindest einen Rolle (132) bestimmt wird.

12. System nach einem der Ansprüche 7 bis 11, wobei der Prozessor ferner konfiguriert ist zum:
Filtern der zusammengestellten Daten gemäß zumindest einem Kriterium.

13. Nicht flüchtiges computerlesbares Medium, das Programmanweisungen speichert, die bei Ausführung einen Prozessor veranlassen, automatisch eine Aktion entsprechend dem Verfahren nach einem der Ansprüche 1 bis 6 durchzuführen.

## Revendications

1. Procédé de présentation de données pertinentes compilées à partir de multiples sources et liées à des rôles d'utilisateur dans de multiples environnements d'application, le procédé comprenant :
présenter des applications en tant que mosaïques sur une page d'accueil d'applications multiples (100) ;
afficher au moins un domaine (131) dans une zone de domaine, dans lequel l'au moins un domaine (131) et la zone de domaine font partie d'une zone de réglages (130), et la zone de réglages (130) est accessible depuis la page d'accueil d'applications multiples (100) ;
sélectionner, par un utilisateur, au moins un des domaines affichés (131) ;
afficher au moins un rôle (132) ;
sélectionner, par l'utilisateur, au moins un des rôles affichés (132) ;
sélectionner, par l'utilisateur, une option de générer une Page de vue d'ensemble pour les domaines et/ou rôles sélectionnés, dans lequel la Page de vue d'ensemble est générée en temps réel dès la sélection de l'option, la page d'accueil d'applications multiples (100) comprenant une série de mosaïques d'application qui sont disponibles pour être sélectionnées par l'utilisateur pour lancer l'application correspondante en fonction des domaines et/ou rôles sélectionnés, et une mosaïque d'application de Page de vue d'ensemble (140) pour lancer la Page de vue d'ensemble générée, dans lequel la Page de vue d'ensemble générée inclut un recueil de Paquets à contenu variable (221 ; 300) ;
compiler des données à partir d'une ou plusieurs des multiples sources de données en fonction de l'au moins un domaine (131) et l'au moins un rôle (132) sélectionnés, dans lequel la ou les sources de données incluent des données à distance provenant d'une ou plusieurs sources de données à distance provenant d'Internet ; et
afficher les données compilées (220), dans lequel les données compilées sont affichées dans au moins un Paquet à contenu variable dans le recueil de Paquets à contenu variable (221 ; 300), le Paquet à contenu variable étant une vue large de données d'application affichées sur une mosaïque d'application ;
dans lequel les Paquets à contenu variable (221) recueillent et compilent des données d'application à partir de la ou des applications en fonction des domaines (131) et/ou rôles (132) sélectionnés ;
dans lequel la Page de vue d'ensemble (200) inclut une barre de réglages (230) incluant un bouton de réglages sélectionnable pour fournir un accès à une seconde zone de réglages (23) pour fournir un autre sous-ensemble de rôles pertinents à un utilisateur en fonction des domaines et/ou rôles sélectionnés au niveau de la page d'accueil d'applications multiples ;
dans lequel la Page de vue d'ensemble permet à l'utilisateur de sélectionner parmi l'autre sous-ensemble de rôles disponibles en fonction des domaines et/ou rôles sélectionnés au niveau de la page d'accueil d'applications multiples, dans lequel une sélection/désélection/changement d'un ou plusieurs rôles déclenche un rafraîchissement de la Page de vue d'ensemble pour afficher des Paquets à contenu variable appropriés avec du contenu en fonction du ou des rôles nouvellement sélectionnés/désélectionnés/changés,
dans lequel les Paquets à contenu variable sont générés par le système pour la Page de vue d'ensemble à une taille par défaut et sont redimensionnables, dans lequel un Paquet à contenu variable redimensionné recueille et compile des données à partir de la même source de données lorsqu'elles sont affichées à une taille différente.

2. Procédé selon la revendication 1, dans lequel l'au moins un rôle affiché (132) est déterminé en fonction de l'au moins un domaine sélectionné (131).

3. Procédé selon la revendication 1, dans lequel l'au moins un Paquet à contenu variable (221 ; 300) est affiché sur la Page de vue d'ensemble (200).

4. Procédé selon l'une quelconque des revendications 1 à 3, comprenant en outre :
afficher au moins un rôle secondaire (232) ;
sélectionner au moins un des rôles secondaires affichés (232) ;
compiler des données à partir d'une ou plusieurs sources de données en fonction de l'au moins un rôle secondaire sélectionné (232) ; et
afficher les données compilées.

5. Procédé selon la revendication 4, dans lequel le rôle secondaire affiché est déterminé en fonction d'au moins un de l'au moins un domaine sélectionné (131) et de l'au moins un rôle sélectionné (131).

6. Procédé selon l'une quelconque des revendications 1 à 5, comprenant en outre :
filtrer les données compilées en fonction d'au moins un critère.

7. Système d'affichage de données pertinentes compilées à partir de multiples sources et liées à des rôles d'utilisateur dans de multiples environnements d'application, le système comprenant :
un écran ; et
un processeur configuré pour réaliser des opérations conformément au procédé selon la revendication 1.

8. Système selon la revendication 7, dans lequel l'au moins un rôle affiché (132) est déterminé en fonction de l'au moins un domaine sélectionné (131).

9. Système selon la revendication 8, dans lequel l'au moins un Paquet à contenu variable (221 ; 300) est affiché sur la Page de vue d'ensemble (200).

10. Système selon l'une quelconque des revendications 7 à 9, dans lequel le processeur est en outre configuré pour :
afficher au moins un rôle secondaire (232) ;
recevoir une sélection d'au moins un des rôles secondaires affichés (232) ;
compiler des données à partir d'une ou plusieurs sources de données en fonction de l'au moins un rôle secondaire sélectionné (232) ; et
afficher les données compilées.

11. Système selon la revendication 10, dans lequel le rôle secondaire affiché (232) est déterminé en fonction d'au moins un de l'au moins un domaine sélectionné (131) et de l'au moins un rôle sélectionné (132).

12. Système selon l'une quelconque des revendications 7 à 11, dans lequel le processeur est en outre configuré pour :
filtrer les données compilées en fonction d'au moins un critère.

13. Support non transitoire lisible par ordinateur stockant des instructions de programme qui, lors de leur exécution, amènent un processeur à réaliser automatiquement une action correspondant au procédé selon l'une quelconque des revendications 1 à 6.
